(19) Europäisches Patentamt
European Patent Office
Office européen des brevets

(11) EP 4 223 416 A1

(12) **EUROPEAN PATENT APPLICATION**
published in accordance with Art. 153(4) EPC

(43) Date of publication:
**09.08.2023 Bulletin 2023/32**

(21) Application number: **21875429.9**

(22) Date of filing: **24.09.2021**

(51) International Patent Classification (IPC):
***B01J 37/02*** *(2006.01)* ***B01J 21/16*** *(2006.01)*
***B01J 23/755*** *(2006.01)* ***C25B 11/00*** *(2021.01)*
***C25B 11/073*** *(2021.01)* ***C25B 9/00*** *(2021.01)*

(52) Cooperative Patent Classification (CPC):
**B01J 21/16; B01J 23/755; B01J 37/02; C25B 9/00; C25B 11/00; C25B 11/073**

(86) International application number:
**PCT/JP2021/035120**

(87) International publication number:
**WO 2022/071127 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.10.2020 JP 2020167901**

(71) Applicant: **Panasonic Intellectual Property Management Co., Ltd.**
**Osaka-shi, Osaka 540-6207 (JP)**

(72) Inventors:
- **SHIRATAKI, Hiroshi**
**Osaka-shi, Osaka 540-6207 (JP)**
- **MURASE, Hideaki**
**Osaka-shi, Osaka 540-6207 (JP)**
- **HAYASHI, Takao**
**Osaka-shi, Osaka 540-6207 (JP)**
- **SUZUKA, Michio**
**Osaka-shi, Osaka 540-6207 (JP)**

(74) Representative: **Grünecker Patent- und Rechtsanwälte PartG mbB**
**Leopoldstraße 4**
**80802 München (DE)**

# (54) ELECTRODE CATALYST INK, ELECTRODE CATALYST, WATER ELECTROLYSIS CELL, AND WATER ELECTROLYSIS DEVICE

(57) The electrode catalyst ink (1) includes a catalyst (10) including a layered double hydroxide, an organic polymer (11), and a solvent (12). The solvent (12) includes a first solvent, a second solvent, and a third solvent. The third solvent has a boiling point higher than a boiling point of the first solvent and higher than a boiling point of the second solvent. The Hansen solubility parameter distance $R_{a1}$ [$MPa^{1/2}$] between the third solvent and the catalyst (10) and the Hansen solubility parameter distance $R_{a2}$ [$MPa^{1/2}$] between the third solvent and the organic polymer (11) satisfy a relationship of $2.08R_{a1} - 16.0 \leq R_{a2} \leq 2.08R_{a1} - 13.5$.

FIG. 5

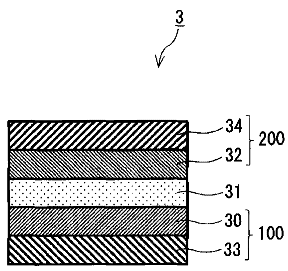


EP 4 223 416 A1

## Description

### Technical Field

The present disclosure relates to an electrode catalyst ink, an electrode catalyst, a water electrolysis cell, and a water electrolyzer.

### Background Art

It has been known to form an electrode catalyst by using an electrode catalyst ink. For example, PTL 1 discloses a method for selecting an additive solvent of an electrode catalyst ink for a fuel battery.
Furthermore, recently, the development of a catalyst material that is used in a water electrolyzer is expected.

### Citation List

### Patent Literature

PTL 1: Japanese Unexamined Patent Application Publication No. 2017-142931

### Summary of Invention

### Technical Problem

The present disclosure provides an electrode catalyst ink for producing an electrode catalyst having a low overvoltage.

### Solution to Problem

The present disclosure provides an electrode catalyst ink including:

a catalyst including a layered double hydroxide;
an organic polymer; and
a solvent, wherein
the solvent includes a first solvent, a second solvent, and a third solvent,
the third solvent has a boiling point higher than a boiling point of the first solvent and higher than a boiling point of the second solvent, and
the Hansen solubility parameter distance $R_{a1}$ [$MPa^{1/2}$] between the third solvent and the catalyst and the Hansen solubility parameter distance $R_{a2}$ [$MPa^{1/2}$] between the third solvent and the organic polymer satisfy a relationship of $2.08R_{a1} - 16.0 \leq R_{a2} \leq 2.08R_{a1} - 13.5$.

### Advantageous Effects of Invention

According to the present disclosure, it is possible to provide an electrode catalyst ink for producing an electrode catalyst having a low overvoltage.

### Brief Description of Drawings

[Fig. 1] Fig. 1 is a diagram schematically illustrating an electrode catalyst ink according to the present embodiment.
[Fig. 2] Fig. 2 is a diagram illustrating the concepts of, in a Hansen solubility parameter (HSP) space, the HSP value of a catalyst, the HSP value of a third solvent, the HSP value of an organic polymer, the HSP value of a mixed solvent, an HSP distance $R_{a1}$, an HSP distance $R_{a2}$, and an HSP distance $R_{a3}$.
[Fig. 3] Fig. 3 is a diagram schematically illustrating an example of the crystal structure of a layered double hydroxide (LDH).
[Fig. 4] Fig. 4 is a diagram schematically illustrating another example of the electrode catalyst ink according to the present embodiment.
[Fig. 5] Fig. 5 is a cross-sectional view schematically illustrating an example of a water electrolysis cell according

to a second embodiment.

[Fig. 6] Fig. 6 is a cross-sectional view schematically illustrating an example of a water electrolyzer according to a third embodiment.

[Fig. 7] Fig. 7 is a cross-sectional view schematically illustrating an example of a water electrolysis cell according to a fourth embodiment.

[Fig. 8] Fig. 8 is a cross-sectional view schematically illustrating an example of a water electrolyzer according to a fifth embodiment.

[Fig. 9] Fig. 9 is a graph showing a relationship between HSP distance $R_{a1}$ and HSP distance $R_{a2}$ in electrode catalyst inks according to Examples and Comparative Examples.

[Fig. 10] Fig. 10 is a diagram showing a photograph of a solidified product of an electrode catalyst ink according to Example 1.

[Fig. 11] Fig. 11 is a diagram showing a photograph of a solidified product of an electrode catalyst ink according to Example 5.

[Fig. 12] Fig. 12 is a diagram showing a photograph of a solidified product of an electrode catalyst ink according to Comparative Example 4.

Description of Embodiments

<Underlying knowledge forming bases of the present disclosure>

As global warming countermeasures, the use of renewable energy, such as solar light and wind power, is attracting attention. However, power generation by renewable energy causes a problem of wasting surplus power. Consequently, the utilization efficiency of renewable energy is not necessarily sufficient. Accordingly, methods for manufacturing hydrogen from surplus power and storing it are being studied.

As a method for manufacturing hydrogen from surplus power, generally, electrolysis of water can be used. Electrolysis of water is also called water electrolysis. In order to manufacture hydrogen inexpensively and stably, the development of a highly efficient and long life water electrolyzer is demanded. As a main component of the water electrolyzer, a membrane electrode assembly (MEA) consisting of a gas diffusion layer, an electrode catalyst layer, and an electrolyte membrane is mentioned.

In order to manufacture the membrane electrode assembly, it is considered to prepare an electrode catalyst ink for water electrolysis. For example, as the electrode catalyst ink for water electrolysis, a dispersion in which a catalyst material and an organic polymer are dispersed in two or more solvents, such as water and an organic solvent, is used. That is, a dispersion in which a catalyst material and an organic polymer are dispersed in a mixed solvent is used as an electrode catalyst ink. It is important that this dispersion is designed so as to have appropriate affinity to the catalyst and the organic polymer. In order to produce an electrode catalyst layer of a membrane electrode assembly by using an electrode catalyst ink, for example, it is considered to apply the electrode catalyst ink to an electrolyte membrane or a gas diffusion layer. Examples of the method for applying the electrode catalyst ink to an electrolyte membrane or a gas diffusion layer are a spray method, a die coat method, a slit coat method, and a dip method. Consequently, an electrode catalyst layer including the electrode catalyst is obtained in at least one of the anode or the cathode.

In order to produce the electrode catalyst layer, it is necessary to remove the solvent included in the electrode catalyst ink after the application of the electrode catalyst ink to an electrolyte membrane or a gas diffusion layer. The solvent can be removed by, for example, drying the electrode catalyst ink. The boiling points and volatilities of the solvents of the mixed solvent included in the electrode catalyst ink can be different. Accordingly, there is a risk of changing the composition of the solvents in the process of drying the electrode catalyst ink to thereby change the affinity of the catalyst and the organic polymer to the solvents. Consequently, when an electrode catalyst layer is produced by drying the electrode catalyst ink, there is a risk of causing cracks on the surface of the electrode catalyst layer.

In the membrane electrode assembly, the ease of peeling of the electrode catalyst layer can be evaluated by, for example, the equation shown below. In the equation below, F is the frictional force necessary for shearing the contact area between the electrode catalyst layer and the electrolyte membrane or the contact area between the electrode catalyst layer and the gas diffusion layer. A is the sum of the true contact areas between the electrode catalyst layer and the electrolyte membrane or the sum of the true contact areas between the electrode catalyst layer and the gas diffusion layer. $\tau$ is the average shear strength of the adhesion area between the electrode catalyst layer and the electrolyte membrane or the average shear strength of the adhesion area between the electrode catalyst layer and the gas diffusion layer.

$$F = A \cdot \tau$$

In the membrane electrode assembly, the contact area between the electrode catalyst layer and the electrolyte membrane or the contact area between the electrode catalyst layer and the gas diffusion layer is likely to decrease by the cracks in the electrode catalyst layer. In such a case, it is inferred that the contact resistance between the electrode catalyst layer and the electrolyte membrane or the contact resistance between the electrode catalyst layer and the gas diffusion layer is increased and that the initial performance of the membrane electrode assembly is low. In addition, if the contact area between the electrode catalyst layer and the electrolyte membrane or the contact area between the electrode catalyst layer and the gas diffusion layer is decreased, as shown in the above equation, since the electrode catalyst is likely to peel off from the membrane electrode assembly, it is inferred that the durability of the membrane electrode assembly is low.

Based on these considerations, it is understood that the occurrence of cracks in the electrode catalyst including the solidified product of the electrode catalyst ink is not said to be advantageous from the viewpoint of, for example, reducing the overvoltage of the electrode catalyst. Accordingly, the present inventors diligently studied about electrode catalyst inks for producing electrode catalysts having a low overvoltage. As a result, it has been newly found that, in an electrode catalyst ink, a predetermined relationship of a solvent having a relatively high boiling point in a mixed solvent with a component included in the electrode catalyst ink is advantageous for decreasing the overvoltage of the electrode catalyst.

<Outline of one aspect according to the present disclosure>

The electrode catalyst ink according to a 1st aspect of the present disclosure includes:

a catalyst including a layered double hydroxide;
an organic polymer; and
a solvent, wherein
the solvent includes a first solvent, a second solvent, and a third solvent,
the third solvent has a boiling point higher than a boiling point of the first solvent and higher than a boiling point of the second solvent, and
the Hansen solubility parameter distance $R_{a1}$ [$MPa^{1/2}$] between the third solvent and the catalyst and the Hansen solubility parameter distance $R_{a2}$ [$MPa^{1/2}$] between the third solvent and the organic polymer satisfy a relationship of $2.08R_{a1} - 16.0 \leq R_{a2} \leq 2.08R_{a1} - 13.5$.

According to the 1st aspect, an electrode catalyst ink for producing an electrode catalyst having a low overvoltage can be provided.

In a 2nd aspect of the present disclosure, for example, in the electrode catalyst ink according to the 1st aspect, the layered double hydroxide may include Ni and Fe. According to the 2nd aspect, the electrode catalyst can more certainly have an excellent catalyst activity.

In a 3rd aspect of the present disclosure, for example, the electrode catalyst ink according to the 1st or 2nd aspect may further include a carrier supporting the catalyst, and the carrier may include a transition metal. According to the 3rd aspect, the electrode catalyst can more certainly have an excellent catalyst activity.

In a 4th aspect of the present disclosure, for example, in the electrode catalyst ink according to the 3rd aspect, the transition metal may include Ni. According to the 4th aspect, the electrode catalyst can more certainly have an excellent catalyst activity.

In a 5th aspect of the present disclosure, for example, in the electrode catalyst ink according to any one of the 1st to 4th aspects, the organic polymer may include a perfluorocarbon polymer having a sulfonate ion group. According to the 5th aspect, the durability of the electrode catalyst can be more certainly improved.

In a 6th aspect of the present disclosure, for example, in the electrode catalyst ink according to any one of the 1st to 5th aspects, the third solvent may be at least one selected from the group consisting of 2-methoxyethanol, 2-ethoxyethanol, ethylene glycol monobutyl ether, 1-methoxy-2-propanol, and propylene glycol 1-monomethyl ether 2-acetate. According to the 6th aspect, an electrode catalyst having a low overvoltage is likely to be more certainly produced.

The electrode catalyst according to a 7th aspect of the present disclosure includes:
a solidified product of the electrode catalyst ink according to any one of the 1st to 6th aspects.

According to the 7th aspect, the electrode catalyst is likely to have a low overvoltage.

The water electrolysis cell according to an 8th aspect of the present disclosure includes:

an anode;
a cathode; and
an electrolyte membrane disposed between the anode and the cathode,
wherein at least one selected from the group consisting of the anode and the cathode includes the electrode catalyst

according to the 7th aspect.

According to the 8th aspect, the water electrolysis cell is likely to have a low overvoltage.

In a 9th aspect of the present disclosure, for example, in the water electrolysis cell according to the 8th aspect, the electrolyte membrane may include an anion exchange membrane. According to the 9th aspect, the oxygen gas generated at the anode and the hydrogen gas generated at the cathode are unlikely to be mixed with each other.

In a 10th aspect of the present disclosure, for example, in the water electrolysis cell according to the 8th aspect, the electrolyte membrane may include a cation exchange membrane. According to the 10th aspect, the oxygen gas generated at the anode and the hydrogen gas generated at the cathode are unlikely to be mixed with each other.

The water electrolysis cell according to an 11th aspect of the present disclosure includes:

a diaphragm separating a first space and a second space;
an anode provided in the first space; and
a cathode provided in the second space,
wherein at least one selected from the group consisting of the anode and the cathode includes the electrode catalyst according to the 7th aspect.

According to the 11th aspect, the water electrolysis cell is likely to have a low overvoltage.

The water electrolyzer according to a 12th aspect of the present disclosure includes:

the water electrolysis cell according to any one of the 8th to 11th aspects; and
a voltage applicator that is connected to the anode and the cathode and that applies a voltage between the anode and the cathode.

According to the 12th aspect, the water electrolyzer is likely to have a low overvoltage.

Hereinafter, embodiments of the present disclosure will be described with reference to the drawings. The present disclosure is not limited to the following embodiments.

Incidentally, all of the embodiments described below show comprehensive and specific examples. Accordingly, the numerical values, shapes, materials, components, etc. shown in the following embodiments are examples and are not intended to limit the present disclosure. Among the components in the following embodiments, components that are not described in independent claims showing the highest-order concept are described as optional components. In addition, the drawings schematically show the respective components for the sake of easy understanding and may not accurately display the shape, dimensional ratio, etc.

(First embodiment)

Fig. 1 is a diagram schematically illustrating an electrode catalyst ink according to the present embodiment. The electrode catalyst ink 1 according to the present embodiment includes a catalyst 10 including a layered double hydroxide (LDH), an organic polymer 11, and a solvent 12. The solvent 12 includes a first solvent, a second solvent, and a third solvent. The third solvent has a boiling point higher than those of the first solvent and the second solvent. The Hansen solubility parameter distance $R_{a1}$ [$MPa^{1/2}$] between the third solvent and the catalyst 10 and the Hansen solubility parameter distance $R_{a2}$ [$MPa^{1/2}$] between the third solvent and the organic polymer 11 satisfy a relationship of $2.08R_{a1} - 16.0 \leq R_{a2} \leq 2.08R_{a1} - 13.5$. According to such configuration, an electrode catalyst ink 1 for producing an electrode catalyst having a low overvoltage can be provided.

The Hansen solubility parameter (HSP) is a parameter indicating the dissolution properties between materials. In the present specification, the HSP means a parameter of a vector quantity obtained by decomposing the Hildebrand solubility parameter into three cohesive energy components: London dispersion force, dipolar force, and hydrogen bonding force. In the present specification, a component corresponding to the London dispersion force of the HSP is mentioned as dispersion term $\delta d$, the component corresponding to the dipolar force of the HSP is mentioned as polarity term $\delta p$, and the component corresponding to the hydrogen bonding force of the HSP is mentioned as hydrogen bond term $\delta h$. The unit of each parameter is $MPa^{1/2}$.

Since the HSP is a vector quantity, for example, in pure materials, almost no materials have the same HSP value. In materials generally used, HSP database thereof have been constructed. The HSP value of a specific material can be acquired by referring to this database. On the other hand, when the HSP value of a material is not registered in any database, the HSP value can be calculated from the chemical structure of the material by using computer software, such as Hansen Solubility Parameters in Practice (HSPiP). In addition, the HSP value of a mixture including a plurality of materials can be calculated as the sum of the values obtained by multiplying the HSP value of each material by the volume ratio of each material to the total mixture. For example, the HSP value of a mixed solvent $S_m$ consisting of a

solvent $S_a$ and a solvent $S_b$ when the volume ratio of these solvents in the mixed solvent, volume of solvent $S_a$ : volume of solvent $S_b$, is x : y is represented by the following equation (1):

[Math. 1]

$$[\delta d_m, \delta p_m, \delta h_m] = \frac{[x \cdot \delta d_a + y \cdot \delta d_b,\ x \cdot \delta p_a + y \cdot \delta p_b,\ x \cdot \delta h_a + y \cdot \delta h_b]}{x + y} \quad \text{Equation (1).}$$

In the equation (1), $\delta d_m$, is the dispersion term of the HSP of the mixed solvent $S_m$, $\delta p_m$, is the polarity term of the HSP of the mixed solvent $S_m$, $\delta h_m$, is the hydrogen bond term of the HSP of the mixed solvent $S_m$, $\delta d_a$ is the dispersion term of the HSP of the solvent $S_a$, $\delta p_a$ is the polarity term of the HSP of the solvent $S_a$, $\delta h_a$ is the hydrogen bond term of the HSP of the solvent $S_a$, $\delta d_b$ is the dispersion term of the HSP of the solvent $S_b$, $\delta p_b$ is the polarity term of the HSP of the solvent $S_b$, and $\delta h_b$ is the hydrogen bond term of the HSP of the solvent $S_b$.

Fig. 2 is a diagram illustrating the concepts of the HSP value of a catalyst 10, the HSP value of a third solvent, the HSP value of an organic polymer 11, the HSP value of a mixed solvent $S_m$, an HSP distance $R_{a1}$, an HSP distance $R_{a2}$, and an HSP distance $R_{a3}$ in an HSP space. As described above, the solvent 12 includes a third solvent. The third solvent corresponds to, for example, a high boiling point solvent. The HSP distance $R_{a1}$ means the HSP distance between the catalyst 10 and the third solvent in an HSP space. The HSP distance $R_{a2}$ means the HSP distance between the third solvent and the organic polymer 11 in an HSP space. The HSP distance $R_{a3}$ means the HSP distance between the third solvent and the mixed solvent $S_m$ consisting of two or more solvents excluding the third solvent in an HSP space.

As described above, the solvent 12 includes a first solvent, a second solvent, and a third solvent. The third solvent has a boiling point higher than those of the first solvent and the second solvent. That is, the third solvent is less likely to volatilize than the first solvent and the second solvent. Accordingly, even if the first solvent and the second solvent volatilize in the process of drying the electrode catalyst ink 1, the third solvent is likely to be present near the catalyst 10 or the organic polymer 11 over a long period of time. Consequently, cracks are unlikely to occur in the electrode catalyst obtained by drying the electrode catalyst ink 1. As a result, an electrode catalyst having a low overvoltage can be provided.

As described above, in the electrode catalyst ink 1, the HSP distance $R_{a1}$ and the HSP distance $R_{a2}$ satisfy a relationship of $2.08R_{a1} - 16.0 \le R_{a2} \le 2.08R_{a1} - 13.5$. Consequently, a relationship between the affinity between the third solvent and the catalyst 10 and the affinity between the third solvent and the organic polymer 11 is likely to be adjusted to a desired state. Consequently, the organic polymer 11 is unlikely to aggregate, and the organic polymer 11 is likely to be present on the surface of the catalyst 10 by adsorption between the catalyst 10 and the organic polymer 11. In addition, in the electrode catalyst ink 1, the affinity between the catalyst 10 and the solvent 12 is kept good, and the catalyst 10 is likely to be well dispersed in the electrode catalyst ink 1. Furthermore, in the electrode catalyst ink 1, the organic polymer 11 is unlikely to separate from the surface of the catalyst 10. In addition, as described above, the third solvent is likely to be present near the catalyst 10 or the organic polymer 11 over a long period of time in the process of drying the electrode catalyst ink 1. Consequently, the organic polymer 11 is likely to be present on the surface of the catalyst 10 in the process of drying the electrode catalyst ink 1, and the organic polymer 11 is unlikely to separate from the surface of the catalyst 10. Consequently, cracks are unlikely to occur in the electrode catalyst obtained by drying the electrode catalyst ink 1. As a result, an electrode catalyst having a low overvoltage can be provided. The HSP distance $R_{a1}$ and the HSP distance $R_{a2}$ are represented respectively by the following equations (2) and (3):

$$R_{a1}^2 = 4 \times (\delta d_c - \delta d_p)^2 + (\delta p_c - \delta p_p)^2 + (\delta h_c - \delta h_p)^2 \quad \text{Equation (2),}$$

$$R_{a2}^2 = 4 \times (\delta d_i - \delta d_p)^2 + (\delta p_i - \delta p_p)^2 + (\delta h_i - \delta h_p)^2 \quad \text{Equation (3).}$$

In the equation (2), $\delta d_c$ is the dispersion term of the HSP of the catalyst 10, 6p, is the polarity term of the HSP of the catalyst 10, and $\delta h_c$ is the hydrogen bond term of the HSP of the catalyst 10. In the equation (3), $\delta d_i$ is the dispersion term of the HSP of the organic polymer 11, $\delta p_i$ is the polarity term of the HSP of the organic polymer 11, and $\delta h_i$ is the hydrogen bond term of the HSP of the organic polymer 11. In the equations (2) and (3), $\delta d_p$ is the dispersion term of the HSP of the third solvent, $\delta p_p$ is the polarity term of the HSP of the third solvent, and $\delta h_p$ is the hydrogen bond term of the HSP of the third solvent. Incidentally, the HSP distance $R_{a1}$ and the HSP distance $R_{a2}$ are unlikely to be affected by the boiling point of the third solvent.

The third solvent may have high miscibility with the other solvents included in the solvent 12. Consequently, the solvent 12 is unlikely to cause phase separation. For example, the HSP distance $R_{a3}$ [$MPa^{1/2}$] between the third solvent $S_p$ and the mixed solvent $S_m$ consisting of two or more solvents excluding the third solvent is represented by the following equation (4):

$$R_{a3}^2 = 4 \times (\delta d_m - \delta d_p)^2 + (\delta p_m - \delta p_p)^2 + (\delta h_m - \delta h_p)^2 \quad \text{Equation (4).}$$

The affinity and miscibility between two materials are likely to have a predetermined correlation with the HSP distance between the two materials. The HSP distance $R_{a3}$ is not limited to a specific value. The HSP distance $R_{a3}$ is, for example, 30 $MPa^{1/2}$ or less. Consequently, in the electrode catalyst ink 1, the third solvent and the mixed solvent consisting of two or more solvents excluding the third solvent are likely to have excellent miscibility. The HSP distance $R_{a3}$ may be 25 $MPa^{1/2}$ or less or may be 20 $MPa^{1/2}$ or less. The lower limit of the HSP distance $R_{a3}$ is not limited to a specific value and may be 10 $MPa^{1/2}$ or 15 $MPa^{1/2}$.

In the electrode catalyst ink 1, as long as a relationship of $2.08R_{a1} - 16.0 \leq R_{a2} \leq 2.08R_{a1} - 13.5$ is satisfied, the HSP distance $R_{a1}$ and the HSP distance $R_{a2}$ are not limited to specific values. The HSP distance $R_{a2}$ may be 14 or less, 13 $MPa^{1/2}$ or less, or 10 $MPa^{1/2}$ or less. The HSP distance $R_{a2}$ may be 5 $MPa^{1/2}$ or more or 10 $MPa^{1/2}$ or more.

[Organic polymer]

As described above, the electrode catalyst ink 1 includes an organic polymer 11. The organic polymer 11 disperses, for example, the catalyst 10. The organic polymer 11 can be an organic material that can be present on the surface of the catalyst 10. The organic polymer 11 is present on, for example, at least a part of the surface of the catalyst 10. The organic polymer 11 may be present between particles of the catalyst 10. The organic polymer 11 may be in contact with the catalyst 10. The organic polymer 11 may cover at least a part of the surface of the catalyst 10. When the electrode catalyst ink 1 includes the organic polymer 11, aggregation of particles of the catalyst 10 can be prevented by the steric hindrance caused by the organic polymer 11. Consequently, in the electrode catalyst ink 1, the catalyst 10 and the organic polymer 11 are likely to have excellent dispersibility. In addition, when an electrode catalyst is formed on a base material, such as a substrate, the bondability between the base material and the electrode catalyst can be improved by that the electrode catalyst ink 1 includes the organic polymer 11. Consequently, an electrode catalyst having excellent durability can be provided.

The organic polymer 11 is not limited to a specific organic material. The organic polymer 11 may be an organic polymer including fluorine. The organic polymer 11 may be an ion exchange resin including fluorine. The organic polymer 11 may be an organic polymer having fluorine and a sulfonate ion group. The organic polymer 11 may include a perfluorocarbon polymer having a sulfonate ion group. When the organic polymer 11 includes fluorine, the thermal stability and electrochemical stability of the organic polymer 11 can be improved. Furthermore, when the organic polymer 11 includes fluorine, the alkali resistance of the electrode catalyst can be more certainly improved. The perfluorocarbon polymer having a sulfonate ion group is, for example, Nafion (registered trademark). Nafion is, for example, an organic polymer having proton conductivity. Nafion has the following chemical formula:

[Chem. 1]

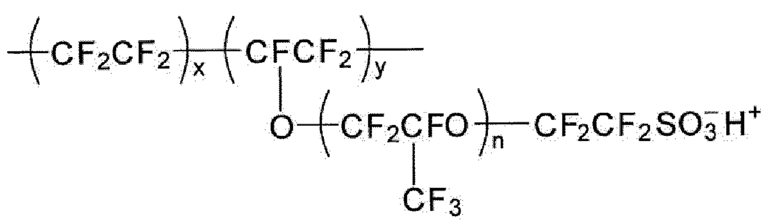

In the above chemical formula, y/x satisfies $1 \leq y/x \leq 9$, and n is an integer of 0 or more and 2 or less.

The HSP value of the organic polymer 11 can be determined by, for example, referring to a database or calculating using computer software such as HSPiP. When the organic polymer 11 has an amphiphilic structure including a hydrophobic part and a hydrophilic part, the HSP value of the organic polymer 11 can be determined by the above-mentioned method for each of the hydrophobic part and the hydrophilic part. When the solvent 12 included in the electrode catalyst ink 1 is a hydrophobic solvent, the HSP value of the hydrophobic part of the organic polymer 11 may be used. When the solvent 12 included in the electrode catalyst ink 1 is a hydrophilic solvent, the HSP value of the hydrophilic

part of the organic polymer 11 may be used.

For example, the dispersion term of the HSP in the hydrophilic part of Nafion is 15.2 $MPa^{1/2}$. The polarity term of the HSP in the hydrophilic part of Nafion is 9.3 $MPa^{1/2}$. The hydrogen bond term of the HSP in the hydrophilic part of Nafion is 19.6 $MPa^{1/2}$. In addition, for example, the dispersion term of the HSP in the hydrophobic part of Nafion is 15.5 $MPa^{1/2}$. The polarity term of the HSP in the hydrophobic part of Nafion is 16.0 $MPa^{1/2}$. The hydrogen bond term of the HSP in the hydrophobic part of Nafion is 42.3 $MPa^{1/2}$.

The equivalent mass (EW) of the organic polymer 11 is not limited to a specific value. The term "equivalent mass" means the mass of the organic polymer 11 per one mole of an anionic functional group, such as a sulfonate ion group. The equivalent mass of the organic polymer 11 may be 1100 g/mol or less or may be 900 g/mol or less. Consequently, aggregation of the catalyst 10 can be more certainly prevented. As a result, in the electrode catalyst ink 1, the catalyst 10 and the organic polymer 11 are likely to more certainly have excellent dispersibility. The lower limit of the equivalent mass of the organic polymer 11 is not limited to a specific value and may be 720 g/mol or 980 g/mol.

[Solvent]

The solvent 12 is, for example, a solvent that disperses the catalyst 10 and the organic polymer 11 in the electrode catalyst ink 1. The solvent 12 at least includes three solvents. The solvent 12 disperses, for example, the catalyst 10 and the organic polymer 11. The solvent 12 may include four or more solvents. The first solvent, the second solvent, and the third solvent are not limited specific solvents as long as the boiling point of the third solvent is higher than those of the first solvent and the second solvent. The difference between the boiling point of the first solvent and the boiling point of the second solvent is not limited to a specific value and is, for example, 40°C or less. Consequently, the ratio between the content of the first solvent and the content of the second solvent in the solvent 12 is unlikely to change in the process of drying the electrode catalyst ink 1 applied to an electrode. As a result, an electrode catalyst having a low overvoltage is likely to be more certainly produced. In addition, consequently, since the first solvent and the second solvent are likely to be dried in the process of drying the electrode catalyst ink 1 applied to an electrode, the productivity of the electrode catalyst can be more certainly improved. In the solvent 12, the first solvent, the second solvent, and the third solvent are, for example, polar solvents. An example of the first solvent is water. An example of the second solvent is an alcohol. The boiling point of the alcohol is not limited to a specific value and is, for example, 60°C or more and 110°C or less. Examples of the alcohol are methanol, ethanol, 1-propanol, and 2-propanol. As the alcohol, at least one alcohol selected from these alcohols may be used, or a plurality of alcohols may be used. The third solvent has, for example, an ether bond. The third solvent is, for example, at least one selected from the group consisting of 2-methoxyethanol, 2-ethoxyethanol, ethylene glycol monobutyl ether, 1-methoxy-2-propanol, and propylene glycol 1-monomethyl ether 2-acetate. According to these solvents, in the process of drying the electrode catalyst ink 1 applied to an electrode, a change in the affinity between the solvent 12 and the catalyst 10 and a change in the affinity between the solvent 12 and the organic polymer 11 are likely to be prevented. As a result, an electrode catalyst having a low overvoltage is likely to be more certainly produced.

The first solvent, the second solvent, and the third solvent have compatibility with one another. It is desirable that the first solvent, the second solvent, and the third solvent are sufficiently compatible with one another and are not phase-separated in the solvent 12. The types of the solvents and the mixing ratio of the solvents can be adjusted not to cause phase separation of the solvent 12 at room temperature.

The third solvent is, for example, a solvent that disperses the catalyst 10 and the organic polymer 11 in the electrode catalyst ink 1. The solvent 12 is removed, for example, in the process of drying the electrode catalyst ink 1 applied to an electrode. On this occasion, the composition of the solvent 12 may change. The third solvent is less likely to volatilize than the other solvents included in the solvent 12 in the process of drying the electrode catalyst ink 1. Consequently, in the process of drying the electrode catalyst ink 1 applied to an electrode, a change in the affinity between the solvent 12 and the catalyst 10 and a change in the affinity between the solvent 12 and the organic polymer 11 are likely to be prevented. As a result, cracks are unlikely to occur in the electrode catalyst obtained by drying the electrode catalyst ink 1.

When the solvent 12 includes three solvents, the ratio of the contents of the first solvent, the second solvent, and the third solvent in the solvent 12 is not limited to a specific value. The content of the third solvent in the solvent 12 is not limited to a specific value. The content of the third solvent in the solvent 12 is, for example, 10 mass% or less. Consequently, the heating time necessary for drying the electrode catalyst ink 1 and the cost for the heating can be suppressed. The content of the third solvent in the solvent 12 may be 5 vol% or less or 2 vol% or less. The lower limit of the content of the third solvent in the solvent 12 may be, for example, 1 vol%.

The ratio of the volume of the first solvent to the volume of the second solvent in the solvent 12 is not limited to a specific value. The ratio of the volume of the first solvent to the volume of the second solvent in the solvent 12 may be 0.1 or more and 9.0 or less, 0.2 or more and 5.0 or less, or 0.5 or more and 1.5 or less.

The boiling point of the third solvent is not limited to a specific value. The boiling point of the third solvent is,

for example, 100°C or more. The boiling point of the third solvent may be 110°C or more, 115°C or more, or 120°C or more. The upper limit of the boiling point of the third solvent is not limited to a specific value and may be 250°C, 230°C, 220°C, or 210°C. Consequently, a change in the affinity between the solvent 12 and the catalyst 10 and a change in the affinity between the solvent 12 and the organic polymer 11 are likely to be prevented when the electrode catalyst ink 1 is dried. As a result, cracks are unlikely to occur in the electrode catalyst obtained by drying the electrode catalyst ink 1. The boiling point means a boiling point under the atmospheric pressure.

[Catalyst]

The catalyst 10 is a material having activity for a reaction of generating a gas, such as hydrogen and oxygen, at the anode or the cathode of the water electrolysis cell. The catalyst 10 may include a layered double hydroxide (LDH) as the main component. The term "main component" means a component that is included in the largest amount on a mass basis. According to such configuration, the electrode catalyst obtained by drying the electrode catalyst ink 1 is likely to more certainly have a low overvoltage.

The LDH includes, for example, two or more transition metals. The transition metal includes, for example, at least two selected from the group consisting of V, Cr, Mn, Fe, Co, Ni, Cu, W, and Ru.

The LDH has, for example, a composition represented by the following composition formula (5):

$$[M1^{2+}_{1-x}M2^{3+}_{x}(OH)_2][yA^{n-}\cdot mH_2O] \qquad \text{Composition formula (5).}$$

In the composition formula (5), $M1^{2+}$ is a divalent transition metal ion, $M2^{3+}$ is a trivalent transition metal ion, $A^{n-}$ is an interlayer anion, x is a rational number satisfying a condition of $0 < x < 1$, y is a number corresponding to the required amount of charge balance, n is an integer, and m is an appropriate rational number.

The LDH may include, for example, Ni and Fe. For example, in the composition formula (5), M1 may be Ni, and M2 may be Fe. According to such configuration, the electrode catalyst obtained by drying the electrode catalyst ink 1 more certainly has excellent catalyst activity and is likely to show a high catalyst activity, for example, compared when M1 is Co.

The ratio of the amount of Fe to the total amount of Ni and Fe included in the LDH may be 0.25 or more and 0.5 or less. According to such configuration, the electrode catalyst obtained by drying the electrode catalyst ink 1 is likely to more certainly have an excellent catalyst activity.

The LDH may include a chelating agent. In this case, the chelating agent may be coordinated to the transition metal ion in the LDH. Consequently, the dispersion stability of the LDH can be improved. In addition, since the LDH includes the chelating agent, an LDH having a small particle diameter can be manufactured. As a result, since the surface area of the LDH can be increased, the catalyst activity can be improved. The average particle diameter of the LDH may be 100 nm or less or 50 nm or less. The average particle diameter of the LDH may be 10 nm or less. The lower limit of the average particle diameter of the LDH is not limited to a specific value. The lower limit may be 1.5 nm or 2 nm. The LDH includes primary particles containing one or more tiny single crystal regions and secondary particles formed by aggregation of the primary particles. The average particle diameter of the LDH is the value obtained by dividing the area of a two-dimensional distribution diagram, which shows a relationship between the particle diameter and the distribution of the particle size distribution obtained by a small angle X-ray scattering method (SAXS), by the total number of the particles. The distribution means the numerical value proportional to the total volume occupied by the particle counts of the particle diameter. The area of the two-dimensional distribution diagram is, for example, the product of the particle diameter and the particle count corresponding to the particle diameter.

The chelating agent is not limited to a specific chelating agent. The chelating agent is, for example, an organic compound that coordinates to the transition metal in the LDH. The chelating agent may be at least one of a bidentate organic ligand or a tridentate organic ligand. Examples of the chelating agent are a β-diketone, a β-ketoester, and a hydroxycarboxylic acid. Examples of the β-diketone are acetylacetone (ACAC), trifluoroacetylacetone, hexafluoroacetylacetone, benzoylacetone, thenoyltrifluoroacetone, dipivaloylmethane, dibenzoylmethane, and ascorbic acid. Examples of the β-ketoester are methyl acetoacetate, ethyl acetoacetate, ally acetoacetate, benzyl acetoacetate, n-propyl acetoacetate, iso-propyl acetoacetate, n-butyl acetoacetate, iso-butyl acetoacetate, tert-butyl acetoacetate, 2-methoxyethyl acetoacetate, and methyl 3-oxopentanoate. Examples of the hydroxycarboxylic acid and salts thereof are tartaric acid, citric acid, malic acid, gluconic acid, ferulic acid, lactic acid, glucuronic acid, and salts thereof. The chelating agent may include at least one selected from the group consisting of acetylacetone and trisodium citrate. The chelating agent may be at least one of acetylacetone or trisodium citrate.

$A^{n-}$ is an interlayer ion. $A^{n-}$ is an inorganic ion or an organic ion. Examples of the inorganic ion are $CO_3^{2-}$, $NO_3^-$, $Cl^-$, $SO_4^{2-}$, $Br^-$, $OH^-$, $F^-$, $I^-$, $Si_2O_5^{2-}$, $B_4O_5(OH)_4^{2-}$, and $PO_4^{3-}$. Examples of the organic ion are $CH_3(CH_2),SO_4^-$, $CH_3(CH_2)_nCOO^-$, $CH_3(CH_2),PO_4^-$, and $CH_3(CH_2),NO_3^-$. $A^{n-}$ is an anion that is inserted, together with water molecules, between layers of a metal hydroxide. The charge and the ion size of $A^{n-}$ are not limited to specific levels. The LDH may

include one kind of $A^{n-}$ or may include a plurality of kinds of $A^{n-}$.

Fig. 3 is a diagram schematically illustrating an example of the crystal structure of the LDH represented by the composition formula (5). As shown in Fig. 3, LDH20 includes $OH^-$ at each vertex of an octahedron having $M1^{2+}$ or $M2^{3+}$ at the center. The metal hydroxide is represented by $[M1_{1-x}M2_x(OH)_2]^{x+}$. The metal hydroxide has a layered structure in which hydroxide octahedrons share ridges and are two-dimensionally connected to each other. Anions and water molecules are located between the layers of the metal hydroxide. The layers of the metal hydroxide function as host layers 21, and anions and water molecules are inserted therebetween as guest layer 22. That is, as a whole, the LDH20 has a sheet-like structure in which the host layer 21 of the metal hydroxide and the guest layer 22 of anions and water molecules are alternately stacked. The LDH20 has a structure in which $M1^{2+}$ included in the layer of the metal hydroxide is partially substituted with $M2^{3+}$. Accordingly, the surface of the LDH20 is usually positively charged.

The catalyst 10 typically has a particulate shape. The shape of the particle is not limited to a specific shape. Examples of the shape are spherical, elliptical spherical, fibrous, and scaly shapes.

The HSP value of the catalyst 10 can be calculated, for example, as follows. Firstly, at room temperature (25°C), the catalyst 10 is added to a solvent to prepare a liquid mixture. This liquid mixture is pulverized for 30 minutes with an ultrasonic homogenizer and is then left to stand at 25°C. Regarding the solvent used for preparing the liquid mixture, a plot is produced in an HSP space. The HSP value of the solvent can be determined by, for example, referring to a database or calculating using computer software such as HSPiP. Then, a Hansen sphere is produced in the HSP space so as to enclose only the plot of a solvent that is included in the liquid mixture determined in which the catalyst 10 did not precipitate for 30 minutes or more. The center of this Hansen sphere is defined as the HSP value of the catalyst 10. Incidentally, precipitation of the catalyst 10 in a liquid mixture can be verified by, for example, observing the Tyndall phenomenon by irradiating the liquid mixture with laser light.

The solvent to be used for calculating the HSP value of the catalyst 10 is not limited to a specific type of solvent. The number of the solvents to be used for calculating the HSP value of the catalyst 10 is also not limited to a specific number. For example, when the catalyst 10 includes an LDH, examples of the solvent to be used for calculating the HSP value of the catalyst 10 are water, methanol, ethanol, diethyl ethanol, 1,4-dioxane, dimethoxymethane, ethyl acetate, acetone, acetonitrile, N,N-dimethylformamide, N-methylpyrrolidone, dimethyl sulfoxide, nitromethane, chloroform, chlorobenzene, 1-butanol, cyclohexane, cyclohexanol, dibutyl ether, diacetone alcohol, methyl ethyl ketone, tetrahydrofuran, diethylene glycol, dipropylene glycol, γ-butyrolactone, methyl isobutyl ketone, methylene chloride, n-butyl acetate, N-methylpyrrolidone, propylene glycol monomethyl ether, propylene glycol monomethyl ether acetate, tetrachloroethylene, toluene, and hexane. As the solvent to be used for calculating the HSP value of the catalyst 10, at least one selected from the group consisting of these solvents may be used, or a plurality of solvents may be used. For example, when the catalyst 10 includes an LDH, in calculation of the HSP value of the catalyst 10, for example, water, methanol, ethanol, diethyl ethanol, 1,4-dioxane, dimethoxymethane, ethyl acetate, acetone, acetonitrile, N,N-dimethylformamide, N-methylpyrrolidone, dimethyl sulfoxide, nitromethane, chloroform, chlorobenzene, and hexane can be used.

[Carrier]

The electrode catalyst may further include a carrier. The carrier supports, for example, a catalyst. According to such configuration, since the carrier can stably dispose the catalyst on the surface thereof, the catalyst activity of the electrode catalyst is likely to be kept high.

Fig. 4 is a diagram schematically illustrating another example of the electrode catalyst ink according to the present embodiment. The electrode catalyst ink 2 includes a catalyst 10, an organic polymer 11, a solvent 12, and a carrier 13. Even in such configuration, since the solvent 12 include a third solvent, cracks are unlikely to occur in the electrode catalyst obtained by drying the electrode catalyst ink 2. As a result, an electrode catalyst having a low overvoltage can be provided.

In the electrode catalyst ink 2, the organic polymer 11 is present on, for example, at least a part of the surface of the catalyst 10. The organic polymer 11 may be present between particles of the catalyst 10. The organic polymer 11 may be present on the surface of the carrier 13. The organic polymer 11 may be present between particles of the carrier 13. The organic polymer 11 may be present between the carrier 13 and the catalyst 10. When the electrode catalyst ink 2 includes the organic polymer 11, aggregation of the catalyst 10 and the carrier 13 can be prevented by the steric hindrance caused by the organic polymer 11. Consequently, in the electrode catalyst ink 2, the catalyst 10, the organic polymer 11, and the carrier 13 are likely to more certainly have excellent dispersibility. In addition, when an electrode catalyst is formed on a base material, such as a substrate, the bondability between the base material and the electrode catalyst can be improved by that the electrode catalyst ink 2 includes the organic polymer 11. Consequently, an electrode catalyst having excellent durability can be provided.

In the electrode catalyst ink 2, the catalyst 10 may cover the surface of the carrier 13. The catalyst 10 is, for example, in contact with the surface of the carrier 13. The catalyst 10 may cover the entire surface of the carrier 13. The catalyst 10 may only partially cover the surface of the carrier 13. The carrier 13 may have a cross-section whose surface

is covered by the catalyst 10. A covering layer including the catalyst 10 may be formed on the surface of the carrier 13. The covering layer may include the catalyst 10 as the main component.

The carrier 13 typically has electrical conductivity. The carrier 13 is not limited to a specific material. Examples of the material of the carrier 13 are transition metals and carbon materials. Examples of the transition metal are V, Cr, Mn, Fe, Co, Ni, Cu, W, and Ru. Examples of the carbon material are acetylene black and Ketjen black (KB). Consequently, the electrode catalyst is likely to more certainly have an excellent catalyst activity. The carrier 13 may include a single material selected from these materials. or may include a plurality of materials. When the carrier 13 includes a plurality of transition metals, the carrier 13 may be made of an alloy.

The carrier 13 may include, for example, a porous material, such as foam.

The shape of the carrier 13 is not limited to a specific shape. The carrier 13 is, for example, in a particulate shape. The shape of the particle is not limited to a specific shape. Examples of the shape are spherical, elliptical spherical, fibrous, and scaly shapes.

The size of the carrier 13 is not limited to a specific value. For example, when the shape of the carrier 13 is spherical, the average particle diameter of the carrier 13 is not limited to a specific value. The average particle diameter of the carrier 13 may be 100 nm or less or 50 nm or less. The lower limit of the average particle diameter of the carrier 13 may be 10 nm or 20 nm. Consequently, the carrier 13 is likely to support a sufficient amount of the LDH. Furthermore, according to such configuration, the electrode catalyst obtained by drying the electrode catalyst ink 2 can more certainly have, for example, excellent durability in the anode reaction of the water electrolysis. The average particle diameter of the carrier 13 can be determined by, for example, observing the carrier 13 using a transmission electron microscope (TEM). Specifically, the average particle diameter can be determined as the arithmetical mean of particle diameters of arbitrary 50 particles of the carrier 13, which is recognized as observation of the whole of the carrier 13, where the particle diameters are respectively the average values of the maximum diameter and the minimum diameter of each particle of the carrier 13.

Even when the electrode catalyst ink 2 includes the carrier 13 supporting the catalyst 10, the HSP value of a composite material of the catalyst 10 and the carrier 13 can be determined by, for example, the above-described method. In addition, the HSP value obtained by the above-described method is defined as the HSP value of the catalyst.

[Electrode catalyst]

The electrode catalyst according to the present embodiment includes a solidified product of the electrode catalyst ink 1 or 2. That is, the electrode catalyst according to the present embodiment is obtained by drying the electrode catalyst ink 1 or 2. Consequently, the electrode catalyst is likely to have a low overvoltage.

The electrode catalyst according to the present embodiment is used in, for example, a proton exchange membrane type water electrolyzer, an anion exchange membrane type water electrolyzer, or an alkaline diaphragm type water electrolyzer. The electrode catalyst can be used in at least one of the anode or the cathode of the water electrolyzer above.

(Second embodiment)

Fig. 5 is a cross-sectional view schematically illustrating an example of a water electrolysis cell according to the present embodiment.

The water electrolysis cell 3 includes an electrolyte membrane 31, an anode 100, and a cathode 200. The electrolyte membrane 31 is disposed, for example, between the anode 100 and the cathode 200. At least one of the anode 100 or the cathode 200 includes the electrode catalyst described in the first embodiment.

The electrolyte membrane 31 may be an electrolyte membrane having ion conductivity. The electrolyte membrane 31 is not limited to a specific type. The electrolyte membrane 31 may include an anion exchange membrane. The electrolyte membrane 31 may be an anion exchange membrane. The electrolyte membrane 31 is configured such that the oxygen gas generated at the anode 100 and the hydrogen gas generated at the cathode 200 are unlikely to be mixed with each other.

The anode 100 includes, for example, a catalyst layer 30. The catalyst layer 30 may be disposed on one main surface of the electrolyte membrane 31. The term "main surface" means a surface having the largest area of the electrolyte membrane 31. The electrode catalyst included in the catalyst layer 30 is, for example, the electrode catalyst described in the first embodiment. The anode 100 may be further provided with a gas diffusion layer 33 having porosity and electrical conductivity on the catalyst layer 30.

The cathode 200 includes, for example, a catalyst layer 32. The catalyst layer 32 may be disposed on the other main surface of the electrolyte membrane 31. That is, the catalyst layer 32 may be disposed on the main surface of the electrolyte membrane 31 on the opposite side to the main surface on which the catalyst layer 30 is disposed. The catalyst metal that can be used in the catalyst layer 32 is not limited to a specific type. This electrode catalyst may be platinum

or the electrode catalyst described in the first embodiment. The cathode 200 may be further provided with a gas diffusion layer 34 having porosity and electrical conductivity on the catalyst layer 32.

According to the configuration above, since at least one of the anode 100 or the cathode 200 includes the electrode catalyst described in the first embodiment, the water electrolysis cell 3 is likely to have a low overvoltage.

(Third embodiment)

Fig. 6 is a cross-sectional view schematically illustrating an example of a water electrolyzer according to the present embodiment.

The water electrolyzer 4 includes a water electrolysis cell 3 and a voltage applicator 40. Since the water electrolysis cell 3 is the same as the water electrolysis cell 3 of the second embodiment, the description thereof is omitted.

The voltage applicator 40 is connected to the anode 100 and the cathode 200 of the water electrolysis cell 3. The voltage applicator 40 is a device for applying a voltage to the anode 100 and the cathode 200 of the water electrolysis cell 3.

The voltage applicator 40 increases the potential of the anode 100 and decreases the potential of the cathode 200. The voltage applicator 40 is not limited to a specific type as long as it can apply to a voltage between the anode 100 and the cathode 200. The voltage applicator 40 may be a device for adjusting the voltage to be applied between the anode 100 and the cathode 200. Specifically, when the voltage applicator 40 is connected to a DC power supply, such as a battery, a solar battery, or a fuel battery, the voltage applicator 40 includes a DC/DC converter. When the voltage applicator 40 is connected to an AC power supply, such as a commercial power supply, the voltage applicator 40 includes an AC/DC converter. The voltage applicator 40 may be a power type power supply that adjusts the voltage to be applied between the anode 100 and the cathode 200 and the current flowing between the anode 100 and the cathode 200 such that the power to be supplied to the water electrolyzer 4 becomes a predetermined set value.

According to the configuration above, the water electrolyzer 4 is likely to have a low overvoltage.

(Fourth embodiment)

Fig. 7 is a cross-sectional view schematically illustrating an example of a water electrolysis cell according to the present embodiment.

The water electrolysis cell 5 according to the present embodiment is, for example, an alkaline water electrolysis cell 5 using an alkaline aqueous solution. In alkaline water electrolysis, an alkaline aqueous solution is used. Examples of the alkaline aqueous solution are a potassium hydroxide aqueous solution and a sodium hydroxide aqueous solution.

The alkaline water electrolysis cell 5 includes an electrolysis bath 70, a diaphragm 41, an anode 300, and a cathode 400. The electrolysis bath 70 is separated into a first space 50 and a second space 60 by the diaphragm 41 disposed the inside thereof. The anode 300 is provided in the first space 50. The cathode 400 is provided in the second space 60. At least one of the anode 300 or the cathode 400 includes the electrode catalyst described in the first embodiment.

The anode 300 may include the electrode catalyst described in the first embodiment. The anode 300 may include, for example, a catalyst layer, and the catalyst layer may include the electrode catalyst described in the first embodiment.

The cathode 400 may include the electrode catalyst described in the first embodiment. The cathode 400 may include, for example, a catalyst layer, and the catalyst layer may include the electrode catalyst described in the first embodiment.

The diaphragm 41 is, for example, a diaphragm for alkaline water electrolysis.

The anode 300 may be disposed so as to be in contact with the diaphragm 41. Alternatively, there may be a space between the anode 300 and the diaphragm 41. The cathode 400 may be disposed so as to be in contact with the diaphragm 41. Alternatively, there may be a space between the cathode 400 and the diaphragm 41.

The alkaline water electrolysis cell 5 electrolyzes an alkaline aqueous solution to manufacture hydrogen and oxygen. An aqueous solution including a hydroxide of an alkali metal or an alkaline earth metal can be supplied to the first space 50 of the alkaline water electrolysis cell 5. An alkaline aqueous solution can be supplied to the second space 60 of the alkaline water electrolysis cell 5. Hydrogen and oxygen are manufactured by performing electrolysis while discharging an alkaline aqueous solution of a predetermined concentration from the first space 50 and the second space 60.

According to the configuration above, since at least one of the anode 300 or the cathode 400 includes the electrode catalyst described in the first embodiment, the alkaline water electrolysis cell 5 is likely to have a low overvoltage.

(Fifth embodiment)

Fig. 8 is a cross-sectional view schematically illustrating an example of a water electrolyzer according to the present embodiment.

The water electrolyzer 6 according to the present embodiment is, for example, an alkaline water electrolyzer 6 using an alkaline aqueous solution. The alkaline water electrolyzer 6 includes an alkaline water electrolysis cell 5 and a voltage applicator 40. Since the alkaline water electrolysis cell 5 is the same as the alkaline water electrolysis cell 5 of the fourth embodiment, the description thereof is omitted.

The voltage applicator 40 is connected to the anode 300 and the cathode 400 of the alkaline water electrolysis cell 5. The voltage applicator 40 is a device for applying a voltage to the anode 300 and the cathode 400 of the alkaline water electrolysis cell 5.

According to the configuration above, the alkaline water electrolyzer 6 is likely to have a low overvoltage.

EXAMPLES

The present disclosure will now be described in more detail by examples. Incidentally, the following examples are examples of the present disclosure, and the present disclosure is not limited to the following examples.

(Example 1)

(Production of Ni-Fe LDH catalyst material supported by Ni carrier)

Firstly, as a transition metal, a Ni-Fe LDH, which is an LDH including Ni and Fe, was produced as follows. A mixed solvent of water and ethanol was prepared. The ethanol used was a special grade reagent manufactured by FUJIFILM Wako Pure Chemical Corporation. The volume ratio of water and ethanol in the mixed solvent, water volume : ethanol volume, was 2:3. Nickel chloride hexahydrate manufactured by FUJIFILM Wako Pure Chemical Corporation and iron chloride hexahydrate manufactured by FUJIFILM Wako Pure Chemical Corporation were dissolved in this mixed solvent. In this mixed solvent, the total concentration of Ni ions and Fe ions was 1.0 mol/L, and the ratio of the amount of Fe ions to the total amount of Ni ions and Fe ions was 0.33. Furthermore, acetylacetone (ACAC) was added to the mixed solvent as a chelating agent in the amount of one third the total amount of Ni ions and Fe ions. The thus obtained solution was stirred for 30 minutes.

Ni particles in the same mass as that of the Ni-Fe LDH that would be generated when all Ni and Fe included in this solution were ideally reacted were then added to this solution as a carrier. The Ni particles were those manufactured by US Research Nanomaterials, Inc. and had a particle diameter of 20 nm. Subsequently, to the solution including the Ni-Fe LDH and Ni particles, propylene oxide (POX) in an amount twice the amount of chloride ions in the solution was added as a pH increasing agent. The thus obtained solution was stirred for 1 minute. On this occasion, since the POX gradually capture hydrogen ions in the solution, the pH of the solution gradually increased. Accordingly, the resulting solution was left to stand for 3 days, and the mixture including the Ni-Fe LDH and the Ni particles as a target sample was collected.

(Preparation of electrode catalyst ink)

A mixture including a Ni-Fe LDH and Ni particles, a 5 vol% Nafion dispersion solution (Production No.: 527084) manufactured by Aldrich Chemical Co., Ltd., pure water, and ethanol were added to a sample tube to prepare a solution. In the preparation of this solution, the added amount of the mixture including the Ni-Fe LDH and the Ni particles was 20 mg. The added amount of the Nafion dispersion solution was 39.2 microliters ($\mu$L). The volume ratio of water, 1-propanol, and ethanol included in the Nafion dispersion solution, water volume : 1-propanol volume : ethanol volume, was 45 : 48 : 2. The added amount of pure water was 0.50 milliliters (mL), and the added amount of ethanol was 0.48 mL. The ethanol used was a special grade reagent manufactured by FUJIFILM Wako Pure Chemical Corporation. To the thus obtained solution, 0.02 mL of 2-methoxyethanol was added as a high boiling point solvent. The obtained solution was subjected to pulverization with an ultrasonic homogenizer for 30 minutes to prepare an electrode catalyst ink according to Example 1.

(Calculation of Hansen solubility parameter)

The Ni-Fe LDH catalyst supported on the Ni carrier was added to each solvent shown in Table 1 to prepare liquid mixtures. In the preparation of each liquid mixture, the added amount of the Ni-Fe LDH catalyst supported on the Ni carrier was 3 mg, and the added amount of each solvent was 10 mL. Each liquid mixture was subjected to pulverization

with an ultrasonic homogenizer for 30 minutes and was then left to stand to prepare respective samples. Incidentally, the samples were each prepared at room temperature (25°C). In each sample, the ease of precipitation of the Ni-Fe LDH catalyst supported on the Ni carrier was measured. In each sample, a sample of which the catalyst precipitated within 15 minutes when the liquid mixture was left to stand at 25°C was evaluated as "3". A sample of which the catalyst precipitated between 15 and 30 minutes when the liquid mixture was left to stand at 25°C was evaluated as "2". A sample of which the catalyst precipitated within 30 minutes when the liquid mixture was left to stand at 25°C was evaluated as "1". A sample of which the catalyst did not precipitate for 30 minutes or more when the liquid mixture was left to stand at 25°C was evaluated as "0". The results are shown in Table 1. Whether the catalyst in a liquid mixture precipitated or not was determined by a Tyndall phenomenon. Each liquid mixture was left to stand at 25°C, and this liquid mixture was irradiated with laser light of 520 nm. On this occasion, when a Tyndall phenomenon was not visually observed, it was judged that the catalyst precipitated. When a Tyndall phenomenon was visually observed, it was judged that the catalyst did not precipitate.

[Table 1]

| Solvent | Evaluation result |
|---|---|
| Water | 1 |
| Methanol | 0 |
| Ethanol | 1 |
| Diethyl ether | 1 |
| 1,4-Dioxane | 1 |
| Dimethoxymethane | 3 |
| Ethyl acetate | 3 |
| Acetone | 0 |
| Acetonitrile | 0 |
| N,N-Dimethylformamide | 2 |
| N-Methylpyrrolidone | 2 |
| Dimethyl sulfoxide | 2 |
| Nitromethane | 3 |
| Chloroform | 1 |
| Chlorobenzene | 2 |
| Hexane | 3 |

Subsequently, the HSP values of the solvents used in each sample were plotted in an HSP space. A Hansen sphere was produced in the HSP space using HSPiP so as to enclose only the plot of the solvent used in the sample evaluated as "0" in the method above, and the center of this Hansen sphere was defined as the HSP value of the Ni-Fe LDH catalyst supported on the Ni carrier. As a result, the dispersion term $\delta d$ of the HSP of the Ni-Fe LDH catalyst supported on the Ni carrier was 12.6 $MPa^{1/2}$. The polarity term $\delta p$ of the HSP of the Ni-Fe LDH catalyst supported on the Ni carrier was 14.8 $MPa^{1/2}$. The hydrogen bond term $\delta h$ of the HSP of the Ni-Fe LDH catalyst supported on the Ni carrier was 13.7 $MPa^{1/2}$.

(Calculation of HSP distances $R_{a1}$ and $R_{a2}$)

In the electrode catalyst inks according to Example 1, the HSP distance $R_{a1}$ [$MPa^{1/2}$] between the high boiling point solvent and the Ni-Fe LDH catalyst and the HSP distance $R_{a2}$ [$MPa^{1/2}$] between the high boiling point solvent and Nafion were determined by the following equations (6) and (7), respectively. The dispersion term $\delta d_p$ of the HSP, the polarity term $\delta p_p$ of the HSP, and the hydrogen bond term $\delta h_p$ of the HSP of 2-methoxyethanol as the high boiling point solvent were determined by referring to databases. Incidentally, in the equations (6) and (7), the numerical values represented using $MPa^{1/2}$ were substituted for the dispersion term $\delta d_p$ of the HSP, the polarity term $\delta p_p$ of the HSP, and the hydrogen bond term $\delta h_p$ of the HSP. The results are shown in Table 2 and Fig. 9.

$$R_{a1}^2 = 4 \times (12.6 - \delta d_p)^2 + (14.8 - \delta p_p)^2 + (13.7 - \delta h_p)^2 \quad \text{Equation (6)}$$

$$R_{a2}^2 = 4 \times (15.2 - \delta d_p)^2 + (9.3 - \delta p_p)^2 + (19.6 - \delta h_p)^2 \quad \text{Equation (7)}$$

(Example 2)

An electrode catalyst ink according to Example 2 was prepared as in the preparation of the electrode catalyst ink according to Example 1 except that 2-ethoxyethanol was used instead of 2-methoxyethanol as the high boiling point solvent. The dispersion term $\delta d_p$ of the HSP, the polarity term $\delta p_p$ of the HSP, and the hydrogen bond term $\delta h_p$ of the HSP of 2-ethoxyethanol were determined by referring to databases. Moreover, the HSP distance $R_{a1}$ and the HSP distance $R_{a2}$ in the electrode catalyst ink according to Example 2 were determined according to the equations (6) and (7). The results are shown in Table 2 and Fig. 9.

(Example 3)

An electrode catalyst ink according to Example 3 was prepared as in the preparation of the electrode catalyst ink according to Example 1 except that ethylene glycol monobutyl ether was used instead of 2-methoxyethanol as the high boiling point solvent. The dispersion term $\delta d_p$ of the HSP, the polarity term $\delta p_p$ of the HSP, and the hydrogen bond term $\delta h_p$ of the HSP of ethylene glycol monobutyl ether were determined by referring to databases. Moreover, the HSP distance $R_{a1}$ and the HSP distance $R_{a2}$ in the electrode catalyst ink according to Example 3 were determined according to the equations (6) and (7). The results are shown in Table 2 and Fig. 9.

(Example 4)

An electrode catalyst ink according to Example 4 was prepared as in the preparation of the electrode catalyst ink according to Example 1 except that 1-methoxy-2-propanol was used instead of 2-methoxyethanol as the high boiling point solvent. The dispersion term $\delta d_p$ of the HSP, the polarity term $\delta p_p$ of the HSP, and the hydrogen bond term $\delta h_p$ of the HSP of 1-methoxy-2-propanol were determined by referring to databases. Moreover, the HSP distance $R_{a1}$ and the HSP distance $R_{a2}$ in the electrode catalyst ink according to Example 4 were determined according to the equations (6) and (7). The results are shown in Table 2 and Fig. 9.

(Example 5)

An electrode catalyst ink according to Example 5 was prepared as in the preparation of the electrode catalyst ink according to Example 1 except that propylene glycol 1-monomethyl ether 2-acetate was used instead of 2-methoxyethanol as the high boiling point solvent. The dispersion term $\delta d_p$ of the HSP, the polarity term $\delta p_p$ of the HSP, and the hydrogen bond term $\delta h_p$ of the HSP of propylene glycol 1-monomethyl ether 2-acetate were determined by referring to databases. Moreover, the HSP distance $R_{a1}$ and the HSP distance $R_{a2}$ in the electrode catalyst ink according to Example 5 were determined according to the equations (6) and (7). The results are shown in Table 2 and Fig. 9.

(Comparative Example 1)

An electrode catalyst ink according to Comparative Example 1 was prepared as in the preparation of the electrode catalyst ink according to Example 1 except that ethanolamine was used instead of 2-methoxyethanol as the high boiling point solvent. The dispersion term $\delta d_p$ of the HSP, the polarity term $\delta p_p$ of the HSP, and the hydrogen bond term $\delta h_p$ of the HSP of ethanolamine were determined by referring to databases. Moreover, the HSP distance $R_{a1}$ and the HSP distance $R_{a2}$ in the electrode catalyst ink according to Comparative Example 1 were determined according to the equations (6) and (7). The results are shown in Table 2 and Fig. 9.

(Comparative Example 2)

An electrode catalyst ink according to Comparative Example 2 was prepared as in the preparation of the electrode catalyst ink according to Example 1 except that propanolamine was used instead of 2-methoxyethanol as the high boiling point solvent. The dispersion term $\delta d_p$ of the HSP, the polarity term $\delta p_p$ of the HSP, and the hydrogen bond term $\delta h_p$ of the HSP of propanolamine were determined by referring to databases. Moreover, the HSP distance $R_{a1}$ and the HSP distance $R_{a2}$ in the electrode catalyst ink according to Comparative Example 2 were determined according to

the equations (6) and (7). The results are shown in Table 2 and Fig. 9.

(Comparative Example 3)

An electrode catalyst ink according to Comparative Example 3 was prepared as in the preparation of the electrode catalyst ink according to Example 1 except that isopropanolamine was used instead of 2-methoxyethanol as the high boiling point solvent. The dispersion term $\delta d_p$ of the HSP, the polarity term $\delta p_p$ of the HSP, and the hydrogen bond term $\delta h_p$ of the HSP of isopropanolamine were determined by referring to databases. Moreover, the HSP distance $R_{a1}$ and the HSP distance $R_{a2}$ in the electrode catalyst ink according to Comparative Example 3 were determined according to the equations (6) and (7). The results are shown in Table 2 and Fig. 9.

(Comparative Example 4)

A mixture including a Ni-Fe LDH and Ni particles prepared in Example 1, a Nafion dispersion solution (Production No.: 527084) manufactured by Aldrich Chemical Co., Ltd., pure water, and ethanol were added to a sample tube to prepare a solution. In the preparation of this solution, the added amount of the mixture including the Ni-Fe LDH and the Ni particles was 20 mg. The added amount of the Nafion dispersion solution was 9.8 μL. The added amount of pure water was 0.50 mL, and the added amount of ethanol was 0.5 mL. The ethanol used was a special grade reagent manufactured by FUJIFILM Wako Pure Chemical Corporation. Without adding a high boiling point solvent to this solution, pulverization with an ultrasonic homogenizer was performed for 30 minutes to prepare an electrode catalyst ink according to Comparative Example 4.

[Table 2]

| | High boiling point solvent | Boiling point of high boiling point solvent [°C] | $R_{a1}$ [$MPa^{1/2}$] | $R_{a2}$ [$MPa^{1/2}$] |
|---|---|---|---|---|
| Example 1 | 2-Methoxyethanol | 124 | 9.5 | 5.0 |
| Example 2 | 2-Ethoxyethanol | 202 | 10.1 | 6.1 |
| Example 3 | Ethylene glycol monobutyl ether | 171 | 11.2 | 8.2 |
| Example 4 | 1-Methoxy-2-propanol | 120 | 10.4 | 7.6 |
| Example 5 | Propylene glycol-1-monomethyl ether-2-acetate | 146 | 13.6 | 13.6 |
| Comparative Example 1 | Ethanolamine | 170 | 13.6 | 5.5 |
| Comparative Example 2 | Propanolamine | 188 | 11.6 | 4.6 |
| Comparative Example 3 | Isopropanolamine | 160 | 11.7 | 5.5 |

Fig. 9 is a graph showing a relationship between HSP distance $R_{a1}$ and HSP distance $R_{a2}$ in electrode catalyst inks according to Examples and Comparative Examples. The horizontal axis shows the HSP distance $R_{a1}$, and the vertical axis shows the HSP distance $R_{a2}$. In Fig. 9, the broken lines show a straight line satisfying $R_{a2} = 2.08R_{a1} - 16.0$ and a straight line satisfying $R_{a2} = 2.08R_{a1} - 13.5$. As shown in Fig. 9, in the electrode catalyst inks according to Examples 1 to 5, a relationship of $2.08R_{a1} - 16.0 \leq R_{a2} \leq 2.08R_{a1} - 13.5$ was satisfied.

(Evaluation of overvoltage of catalyst)

The overvoltages of the electrode catalysts according to Examples and Comparative Examples were measured. The measurement used a potentiostat VersaSTAT4 manufactured by Princeton Applied Research and a rotating electrode AFE3T050GC manufactured by Pine Research Instrumentation. Each (19.6 μL) of the electrode catalyst inks according to Examples and Comparative Examples was dropped on the rotating electrode and was then dried at room temperature to produce electrode catalysts for measurement of overvoltage according to Examples and Comparative Examples. The current resulting from an anodic reaction of the water electrolysis cell was measured by a rotating disk

electrode (RDE) method with the following measurement conditions. The anodic reaction is an oxygen generation reaction. The results are shown in Table 3.

[Measurement conditions]

- Solution: 1 mol/L KOH aqueous solution
- Potential: 1.0 V to 1.65 V (vs. reversible hydrogen electrode (RHE))
- Number of cycles: 120 cycles
- Potential sweep rate: 10 mV per second
- Electrode rotation speed: 1500 revolutions per minute (rpm)
- Amount of catalyst supported on electrode: 0.2 $mg/cm^2$
- Measurement temperature: 27°C

In Examples and Comparative Examples, the value obtained by subtracting the theoretical voltage, 1.229 V, from the voltage value when the current density reached 10 $mV/cm^2$ was evaluated as the overvoltage. In the RDE measurement, the measurement results of overvoltage in the 1st cycle and the measurement results of overvoltage in the 120th cycle are shown in Table 3. In the electrode catalysts according to Examples 1 to 5, the overvoltage in the 1st cycle was less than 270 mV. In addition, in the electrode catalysts according to Examples 1 to 5, the overvoltage in the 120th cycle was less than 270 mV. The electrode catalysts produced using the electrode catalyst inks according to Examples 1 to 5 had excellent initial performance and excellent durability. In contrast, in the electrode catalysts according to Comparative Examples 1, 3, and 4, the overvoltage in the 1st cycle was higher than 270 mV. In addition, in the electrode catalysts according to Comparative Examples 1 to 4, the overvoltage in the 120th cycle was higher than 280 mV. The electrode catalysts according to Comparative Examples 1 to 4 had low initial performance and low durability compared to the electrode catalysts according to Examples 1 to 5.

[Table 3]

| | High boiling point solvent | Overvoltage (mV) in 1st cycle | Overvoltage (mV) in 120th cycle |
|---|---|---|---|
| Example 1 | 2-Methoxyethanol | 267 | 263 |
| Example 2 | 2-Ethoxyethanol | 267 | 264 |
| Example 3 | Ethylene glycol monobutyl ether | 263 | 265 |
| Example 4 | 1-Methoxy-2-propanol | 269 | 267 |
| Example 5 | Propylene glycol-1-monomethyl ether-2-acetate | 266 | 266 |
| Comparative Example 1 | Ethanolamine | 273 | 285 |
| Comparative Example 2 | Propanolamine | 268 | 283 |
| Comparative Example 3 | Isopropanolamine | 273 | 313 |
| Comparative Example 4 | - | 278 | 283 |

(Evaluation of appearance of solidified product of electrode catalyst ink)

Ten microliters of each of the electrode catalyst inks according to Examples and Comparative Examples were applied to a polytetrafluoroethylene (PTFE) film and were then dried at room temperature to obtain solidified products of Examples and Comparative Examples.

Fig. 10 is a photograph showing a solidified product according to Example 1. Fig. 11 is a photograph showing a solidified product according to Example 5. Fig. 12 is a photograph showing a solidified product according to Comparative Example 4. As shown in Figs. 10 and 11, in the solidified products according to Examples 1 and 5, cracks were not

observed. In contrast, as shown in Fig. 12, in the solidified product according to Comparative Example 4, cracks were generated.

In the solidified products according to Comparative Examples 1 to 3, something like a groove was visually observed on the surface of each solidified product. In the solidified products according to Comparative Examples 1 to 3, an appearance in which the outer portion of the solidified product was thinned compared to the inner portion was observed.

Industrial Applicability

The electrode catalyst ink according to the present disclosure can be used in a water electrolyzer.

Reference Signs List

1, 2 electrode catalyst ink
3 water electrolysis cell
4 water electrolyzer
5 alkaline water electrolysis cell
6 alkaline water electrolyzer
10 catalyst
11 organic polymer
12 solvent
13 carrier
20 LDH
21 host layer
22 guest layer
30, 32 catalyst layer
31 electrolyte membrane
33, 34 gas diffusion layer
40 voltage applicator
41 diaphragm
50 first space
60 second space
70 electrolysis bath
100, 300 anode
200, 400 cathode

## Claims

**1.** An electrode catalyst ink including:

a catalyst including a layered double hydroxide;
an organic polymer; and
a solvent, wherein
the solvent includes a first solvent, a second solvent, and a third solvent,
the third solvent has a boiling point higher than a boiling point of the first solvent and higher than a boiling point of the second solvent, and
a Hansen solubility parameter distance $R_{a1}$ [$MPa^{1/2}$] between the third solvent and the catalyst and a Hansen solubility parameter distance $R_{a2}$ [$MPa^{1/2}$] between the third solvent and the organic polymer satisfy a relationship of $2.08R_{a1} - 16.0 \leq R_{a2} \leq 2.08R_{a1} - 13.5$.

**2.** The electrode catalyst ink according to claim 1, wherein
the layered double hydroxide includes Ni and Fe.

**3.** The electrode catalyst ink according to claim 1 or 2, further including:

a carrier supporting the catalyst, wherein
the carrier includes a transition metal.

**4.** The electrode catalyst ink according to claim 3, wherein the transition metal includes Ni.

**5.** The electrode catalyst ink according to any one of claims 1 to 4, wherein the organic polymer includes a perfluorocarbon polymer having a sulfonate ion group.

**6.** The electrode catalyst ink according to any one of claims 1 to 5, wherein the third solvent is at least one selected from the group consisting of 2-methoxyethanol, 2-ethoxyethanol, ethylene glycol monobutyl ether, 1-methoxy-2-propanol, and propylene glycol 1-monomethyl ether 2-acetate.

**7.** An electrode catalyst comprising: a solidified product of the electrode catalyst ink according to any one of claims 1 to 6.

**8.** A water electrolysis cell comprising:

an anode;
a cathode; and
an electrolyte membrane disposed between the anode and the cathode, wherein
at least one selected from the group consisting of the anode and the cathode includes the electrode catalyst according to claim 7.

**9.** The water electrolysis cell according to claim 8, wherein the electrolyte membrane includes an anion exchange membrane.

**10.** The water electrolysis cell according to claim 8, wherein the electrolyte membrane includes a cation exchange membrane.

**11.** A water electrolysis cell comprising:

a diaphragm separating a first space and a second space;
an anode provided in the first space; and
a cathode provided in the second space, wherein
at least one selected from the group consisting of the anode and the cathode includes the electrode catalyst according to claim 7.

**12.** A water electrolyzer comprising:

the water electrolysis cell according to any one of claims 8 to 11; and
a voltage applicator that is connected to the anode and the cathode and that applies a voltage between the anode and the cathode.

FIG. 1

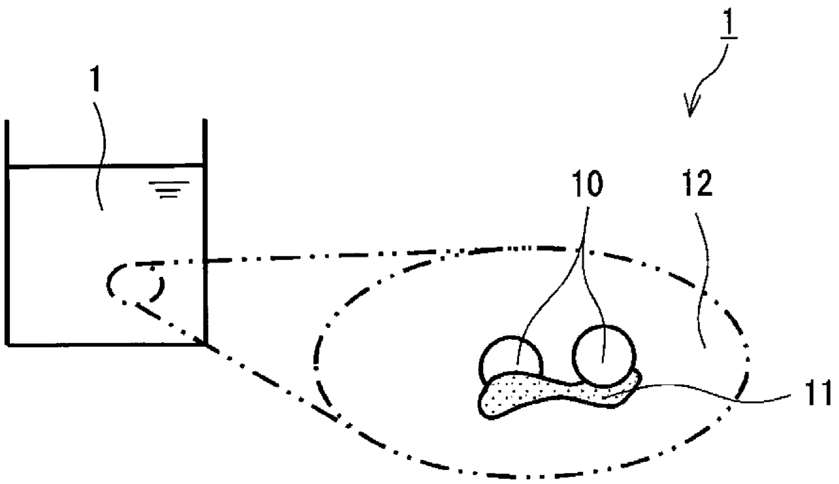
1
1
10
12
11

FIG. 2

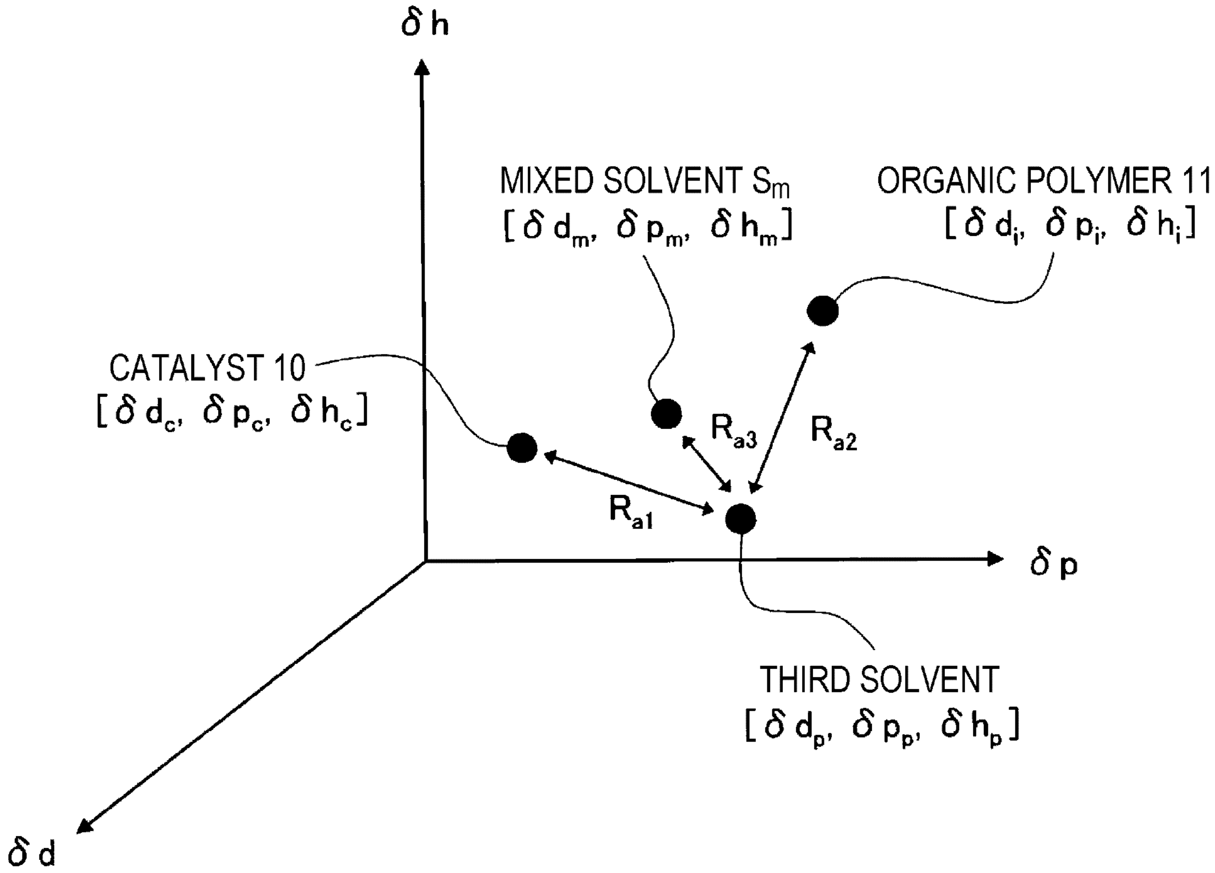
δh
MIXED SOLVENT Sm
[δdm, δpm, δhm]
ORGANIC POLYMER 11
[δdi, δpi, δhi]
CATALYST 10
[δdc, δpc, δhc]
Ra3
Ra2
Ra1
δp
THIRD SOLVENT
[δdp, δpp, δhp]
δd

FIG. 3

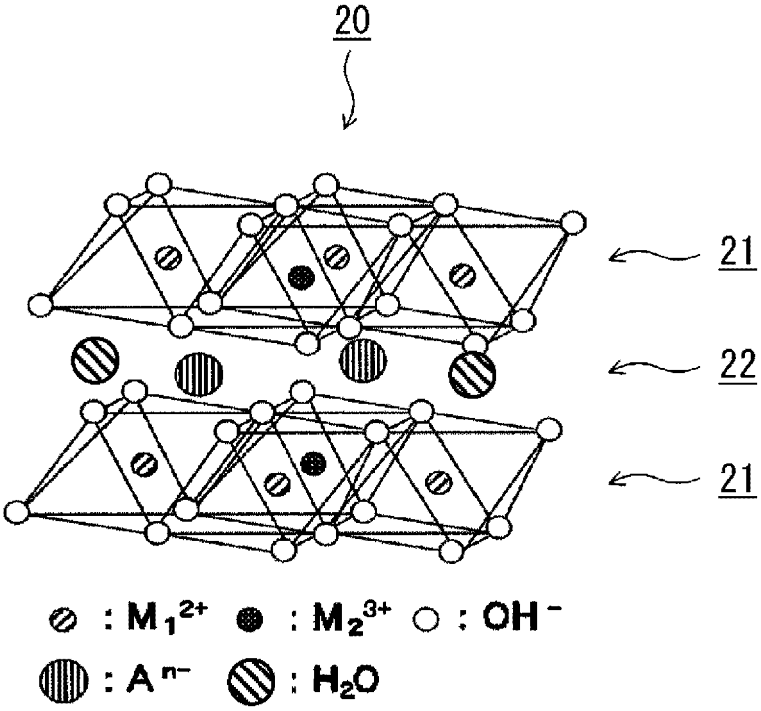


FIG. 4

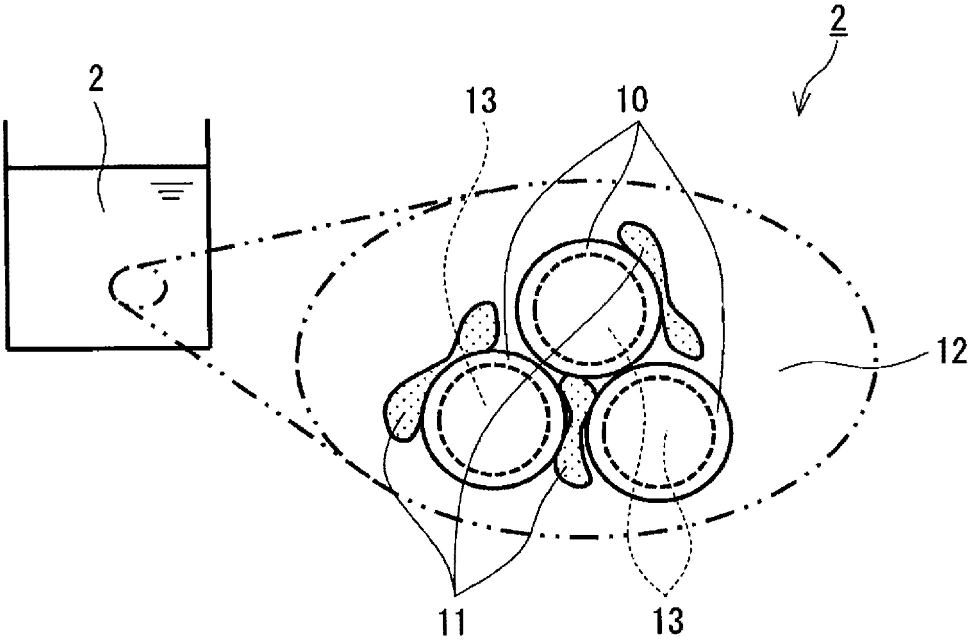

FIG. 5

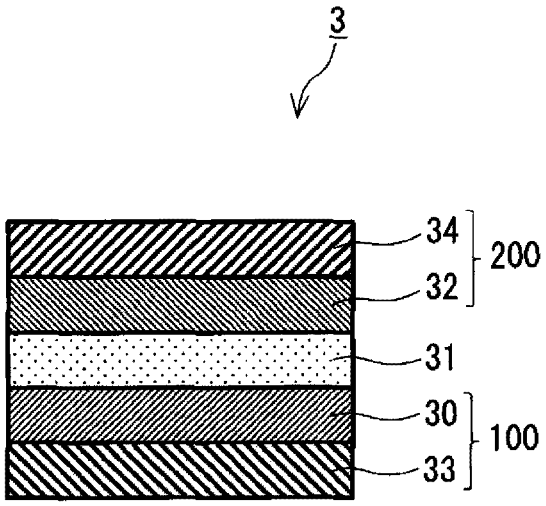


FIG. 6

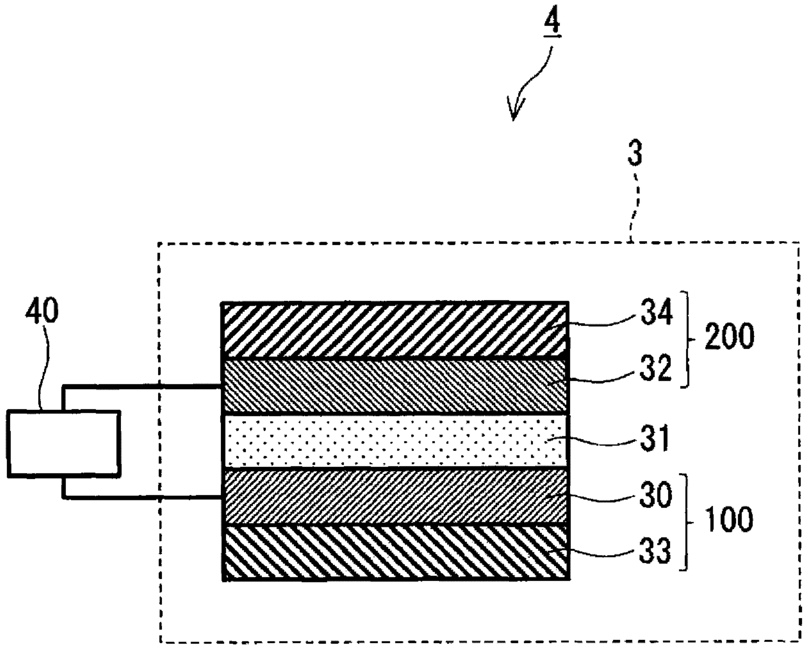

FIG. 7

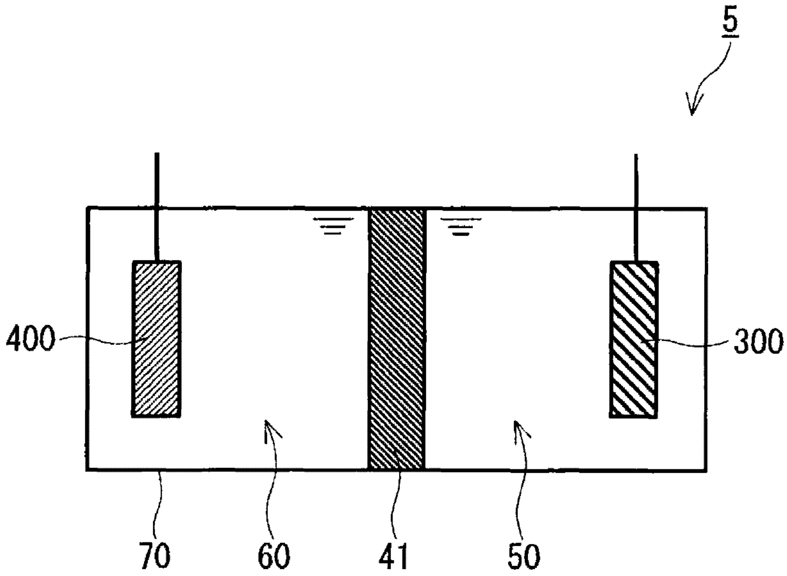


FIG. 8

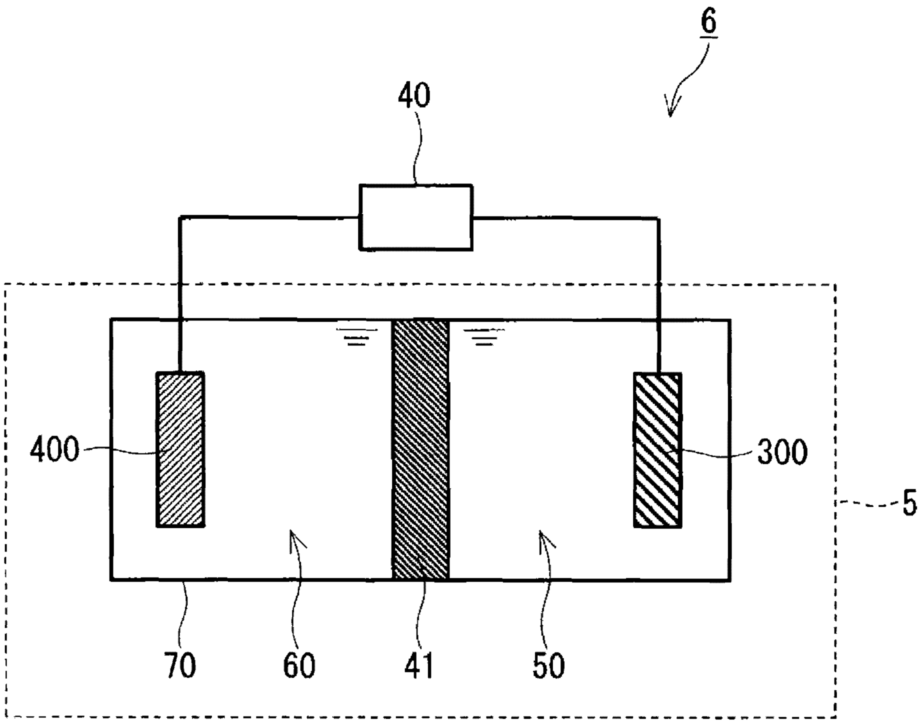

FIG. 9

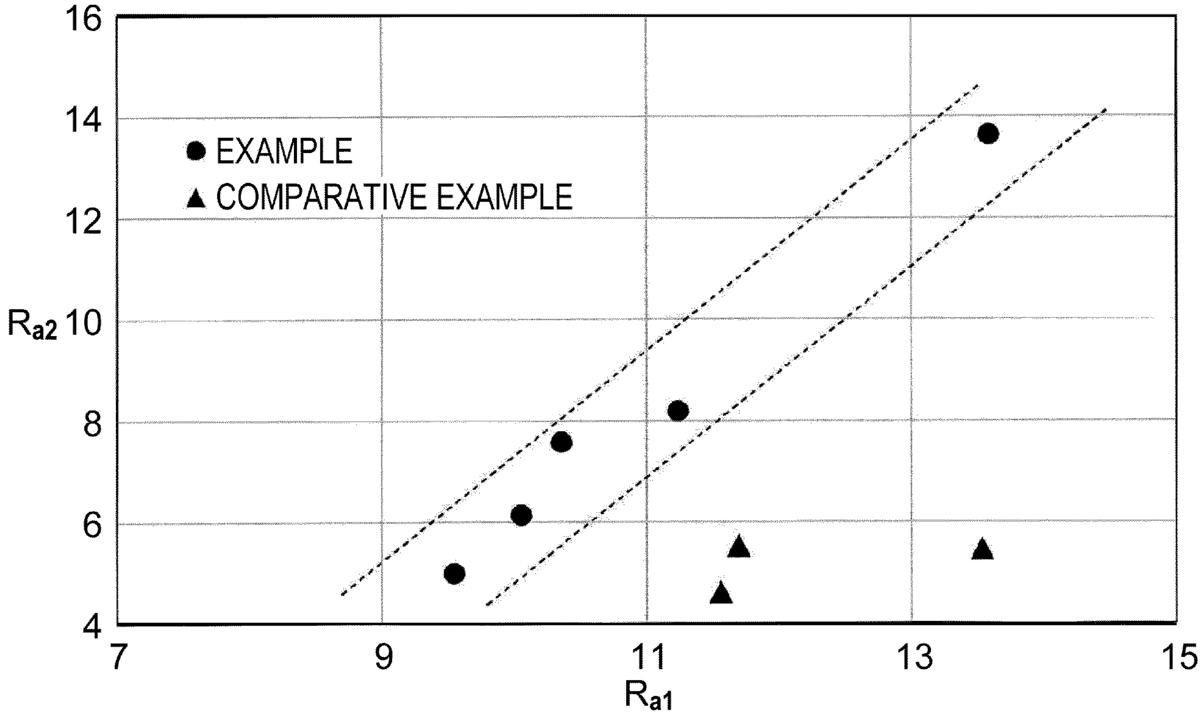


FIG. 10

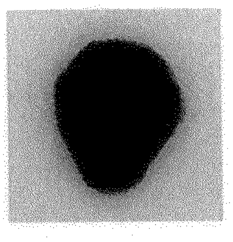

FIG. 11

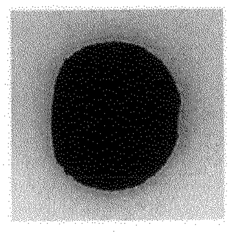

FIG. 12

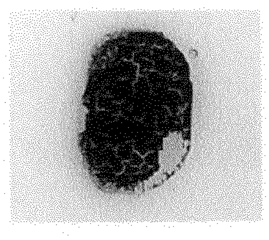

## INTERNATIONAL SEARCH REPORT

International application No.
**PCT/JP2021/035120**

**A. CLASSIFICATION OF SUBJECT MATTER**

***B01J 37/02***(2006.01)i; ***B01J 21/16***(2006.01)i; ***B01J 23/755***(2006.01)i; ***C25B 11/00***(2021.01)i; ***C25B 11/073***(2021.01)i; ***C25B 9/00***(2021.01)i
FI: C25B11/073; C25B9/00 A; B01J37/02 301Z; B01J23/755 M; B01J21/16 M; C25B11/00

According to International Patent Classification (IPC) or to both national classification and IPC

**B. FIELDS SEARCHED**

Minimum documentation searched (classification system followed by classification symbols)

B01J37/02; B01J21/16; B01J23/755; C25B11/00; C25B11/073; C25B9/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-142931 A (TOYOTA MOTOR CORPORATION) 17 August 2017 (2017-08-17) | 1-12 |
| A | JP 2018-139203 A (TOYOTA MOTOR CORPORATION) 06 September 2018 (2018-09-06) | 1-12 |
| A | WO 2019/197513 A1 (TECHNISCHE UNIVERSITAT BERLIN) 17 October 2019 (2019-10-17) | 1-12 |
| A | WO 2020/034007 A1 (NEWSOUTH INNOVATIONS PTY LIMITED) 20 February 2020 (2020-02-20) | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 November 2021** | **07 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/035120**

| Patent document cited in search report | Publication date (day/month/year) | Patent family member(s) | Publication date (day/month/year) |
|---|---|---|---|
| JP 2017-142931 A | 17 August 2017 | (Family: none) | |
| JP 2018-139203 A | 06 September 2018 | (Family: none) | |
| WO 2019/197513 A1 | 17 October 2019 | US 2021/0028465 A1 | |
| WO 2020/034007 A1 | 20 February 2020 | US 2021/0348284 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017142931 A